# EUROPÄISCHE PATENTSCHRIFT

(11) **EP 1 867 459 B1**
(45) Veröffentlichungstag und Bekanntmachung des Hinweises auf die Patenterteilung: **19.11.2008**
(21) Anmeldenummer: 06012339.5
(22) Anmeldetag: 14.06.2006
(51) Int. Cl.: B29C 47/08, B29C 47/88, B29C 47/90

(54) **Vorrichtung zum Kalibrieren und Kühlen von Kunststoffprofilen**
Apparatus for calibrating and cooling of plastic profiles
Appareil de calibrage et refroidissement de profilés en plastique

(43) Veröffentlichungstag der Anmeldung: 19.12.2007
(73) Patentinhaber: ALUPLAST GMBH, 76227 Karlsruhe (DE)
(72) Erfinder: Krell, Rüdiger, 76275 Ertlingen/Spessart (DE)
(74) Vertreter: Babeluk, Michael

(56) Entgegenhaltungen:
- EP-A1- 0 925 905
- EP-A1- 0 950 497
- GB-A- 2 418 172
- US-A1- 2005 081 475

## Beschreibung

Die Erfindung betrifft eine Vorrichtung zum Kalibrieren und Kühlen von Kunststoffprofilen, bestehend aus mindestens einer Wanne mit einer ersten Stirnwand und einer zweiten Stirnwand, in denen Öffnungen zum Durchtritt des zu bearbeitenden Kunststoffprofils vorgesehen sind, und mit Blenden, die zwischen den Stirnwänden angeordnet sind, um das Kunststoffprofil zu führen und zu kalibrieren, wie bei der Vorrichtung gemäß EP 0950497, wobei an den Stirnwänden Zentriervorsprünge und Zentriervertiefungen angeordnet sind.

Zur Produktion von Kunststoffprofilen werden Extrusionslinien verwendet, die grundsätzlich aus einem Extruder mit einer Extrusionsdüse, einer Trockenkalibriereinrichtung und einer daran anschließenden Nasskalibriereinrichtung bestehen. Weiters weist eine solche Extrusionslinie üblicherweise einen Raupenabzug und eine Säge zum Abtrennen von Profilabschnitten auf. Die Nasskalibriereinrichtung besteht im Allgemeinen aus mehreren Kalibrierwannen, in denen das aus der Trockenkalibriereinrichtung austretende Profil durch ein Wasserbad geführt wird und damit endgültig abgekühlt wird. Zur Führung und Kalibrierung des Kunststoffprofils sind in der Wanne in vorbestimmten Abständen Kalibrierblenden angeordnet, die jeweils eine Öffnung aufweisen, die der Außenkontur des Profils entspricht. Das Kühlmedium, üblicherweise Wasser, innerhalb der Wanne wird durch entsprechende Pumpen in Längsrichtung der Wanne umgewälzt, wobei durch entsprechende Öffnungen in den Kalibrierblenden Turbulenzen erzeugt werden, die die Kühlwirkung verbessern. Je nach Richtung der Umwälzung ist eine Kühlung im Gleichstrom oder im Gegenstrom möglich, was je nach Einsatzfall entsprechend ausgewählt wird. Die Wanne wird an Vakuumpumpen angeschlossen, um im Inneren einen Unterdruck zu erzeugen, der gewährleistet, dass sich das Profil an die Kalibrierblenden anlegt. Dieser Unterdruck wird in der Regel auch zur Förderung des Kühlmediums verwendet, wobei eine Druckdifferenz in Kühlmedienförderrichtung dabei erforderlich ist.

Herkömmliche Wannen sind aufgrund ihres konstruktiven Aufbaus entweder für eine Kühlung im Gleichstrom oder für eine Kühlung im Gegenstrom ausgebildet. Eine Änderung ist diesbezüglich nur durch tiefgreifende Umbaumaßnahmen möglich. Des weiteren bilden mehrere Wannen dicht hintereinander liegend eine für den Abkühlvorgang erforderliche entsprechend lange Kalibrierstrecke. Dabei zeigt sich, dass bei einer jeweils gleichen Anordnung der Wannen mit Gegen- bzw. Gleichstromkühlung an den Kontaktflächen der jeweils benachbarten Wannen eine Druckdifferenz besteht. Diese Druckdifferenz führt vielfach zu Beeinträchtigungen der Laufruhe im Produktionsbetrieb.

Aufgabe der vorliegenden Erfindung ist es, die Vorrichtung der oben beschriebenen Art so weiterzubilden, dass sie vielseitig einsetzbar ist und mit geringst möglichem Aufwand hinsichtlich des Kühlprinzips veränderbar ist und eine wesentliche Verbesserung der Laufruhe ermöglicht.

Erfindungsgemäß werden diese Aufgaben dadurch gelöst, dass die Zentriervorsprünge und die Zentriervertiefungen an beiden Stirnwänden in der Draufsicht gleichartig angeordnet sind und dass bezüglich einer in Gebrauchslage senkrechten Mittelachse jeder Stirnwand symmetrisch zu jedem Zentriervorsprung eine Zentriervertiefung angeordnet ist.

Wesentlich an der vorliegenden Erfindung ist, dass jede einzelne Wanne grundsätzlich beidseitig verwendbar ist, d.h., dass durch eine Drehung von 180° die stromaufwärtige Stirnfläche zur stromabwärtigen Stirnfläche gemacht werden kann und umgekehrt.

Eine alternative Möglichkeit, wahlweise eine Kühlwirkung im Gegen- bzw. Gleichstrom zu ermöglichen wäre die doppelte Anordnung von Wasser- und Vakuumanschlüssen an den Seitenwänden der Wannen. Dies hat jedoch den Nachteil zur Folge, dass jede Anschlussvorrichtung einen Kostenfaktor darstellt, und eine Schwachstelle (mangelnde Dichtheit) darstellt, die zu einem Mehrbedarf an Energie zur Erzeugung des Unterdruckes führt.

Eine Verbesserung der Laufruhe im Produktionsbetrieb wird dadurch ermöglicht, dass die Druckdifferenzen an den Kontaktflächen aneinandergereihter Wannen eliminiert werden, was dadurch ermöglicht wird, dass die jeweils aufeinander folgenden Wannen abwechselnd im Gegen- und Gleichstrom betrieben werden.

In den Wannen sind die Blenden steckbar angeordnet, sodass die Blenden an die jeweilige Extrusionsrichtung - durch ebenfalls eine 180° Drehung - angepasst werden können. Dies gilt sowohl für die Blenden in den Wannen als auch für jene Blenden, die die Stirnwände der Wannen bilden.

In der Folge wird die Erfindung anhand des in den Figuren dargestellten Ausführungsbeispiels näher erläutert. Es zeigen:
- Fig. 1a: eine Ansicht einer erfindungsgemäßen Wanne von oben;
- Fig. 1b: eine seitliche Ansicht der Wanne von Fig. 1a, Fig. 1c und Fig. 1d Stirnansichten der obigen Wanne;

- Fig. 2: eine Explosionsdarstellung der Wanne in vergrößertem Maßstab; sowie
- Fig. 3: und Fig. 4 unterschiedliche Anordnungen mehrerer Wannen.

Die Wanne T1 besteht aus einer Grundschiene 12, 14, an der Seitenteile 9, 10 angefügt sind, um einen Wasseraufnahmeraum im Inneren auszubilden. Die senkrechte Mittelachse des Querschnitts der Wanne ist mit 14a bezeichnet. An der Grundschiene 12 sind symmetrisch zur Mittelachse 14a Zentriervorsprünge 13 und Zentriervertiefungen 15 vorgesehen, wobei jeweils symmetrisch zu einer Zentriervorsprung 13 eine Zentriervertiefung 15 angeordnet ist. Die Zentriervorsprünge 13 sind als Einschraubteile ausgebildet. Zwischen die Seitenteile 9 sind Kalibrierblenden 8 eingesteckt, die Öffnungen 8a zur Führung und Kalibrierung des zu produzierenden, nicht dargestellten Profils aufweisen. Die Kalibrierblenden 8 sind insoweit symmetrisch ausgebildet, als es möglich ist, diese zu entnehmen, um die Achse 14a um 180° zu drehen und in umgekehrter Position wieder einzustecken, so dass die Öffnung 8a die spiegelbildliche Position einnimmt. In analoger Weise lassen sich Stirnwände 20 der Wanne T1 wenden. An der Oberseite der Wanne T1 ist ein Tankdeckel 6 mit Scharnier 5 nach oben aufklappbar befestigt. Ein Halteteil 5a, der das Scharnier 5 trägt, ist wahlweise an dem rechten bzw. dem linken Seitenteil 9, 10 befestigbar, so dass die Aufklapprichtung des Deckels 6 veränderlich ist. Analog dazu ist ein Verschlussspanner 11 zur Sicherung des Deckels 6 wahlweise rechts oder links anschlagbar. Am Deckel 6 ist über einen Anschlussteil 4 eine Druckanzeige 3 angebracht. Wasser- bzw. Vakuumansaugungen sind mit 1, 2, 11, 22 dargestellt. 7 bezeichnet eine Luftströmungsleiteinrichtung.

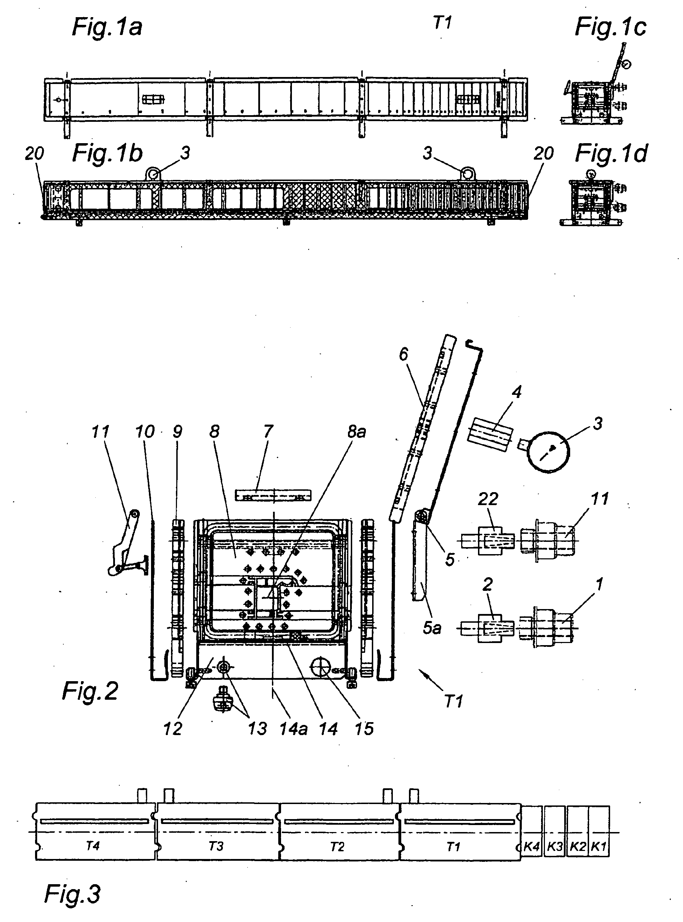

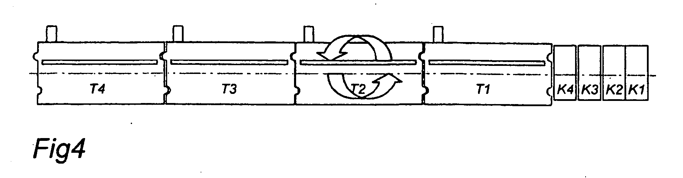

Fig. 3 und Fig. 4 zeigen alternative Varianten zum Aufbau von Abkühlstrecken. Bei der Ausführungsvariante von Fig. 3 sind anschließend an vier nicht näher dargestellten Trockenkaliber K1, K2, K3, K4, vier erfindungsgemäße Vorrichtungen T1, T2, T3, T4 dargestellt. Diese sind abwechselnd im Gleichstrom und im Gegenstrom betrieben. Die Extrusionsrichtung ist mit dem Pfeil 23 angedeutet.

Fig. 4 zeigt die Möglichkeit, die einzelnen Vorrichtungen, d.h. Wannen T1, T2, T3, T4, um 180° zu wenden, um Gleichstrom in Gegenstrom zu ändern und umgekehrt.

Die erfindungsgemäße Lösung ermöglicht es, höhere Freiheitsgrade bei der Optimierung von Extrusionslinien zu realisieren.

## Patentansprüche

1. Vorrichtung zum Kalibrieren und Kühlen von Kunststoffprofilen, bestehend aus mindestens einer Wanne (T1, T2, T3, T4), mit einer ersten Stirnwand (20) und einer zweiten Stirnwand (20), in denen Öffnungen (8a) zum Durchtritt des zu bearbeitenden Kunststoffprofils vorgesehen sind, und mit Blenden (8), die zwischen den Stirnwänden (20) angeordnet sind um das Kunststoffprofil zu führen und zu kalibrieren, **dadurch gekennzeichnet, dass** an den Stirnwänden (20) Zentriervorsprünge (13) und Zentriervertiefungen (15) angeordnet sind, wobei die Zentriervorsprünge (13) und die Zentriervertiefungen (15) an beiden Stirnwänden (20) in der Draufsicht gleichartig angeordnet sind und dass bezüglich einer in Gebrauchslage senkrechten Mittelachse (14a) jeder Stirnwand (20) symmetrisch zu jedem Zentriervorsprung (13) eine Zentriervertiefung (15) angeordnet ist.

2. Vorrichtung nach Anspruch 1, **dadurch gekennzeichnet, dass** ein Tankdeckel (6) vorgesehen ist, der wahlweise an einer ersten Seitenwand (9, 10) oder an einer zweiten Seitenwand (9, 10) der Wanne (T1, T2, T3, T4) anschlagbar ist.

3. Vorrichtung nach Anspruch 2, **dadurch gekennzeichnet, dass** zum Verschließen des Tankdeckels (6) Verschlussspanner (11) vorgesehen sind, die wahlweise an der ersten Seitenwand (9, 10) bzw. an der zweiten Seitenwand (9, 10) der Wanne (T1, T2, T3, T4) anschlagbar sind.

4. Vorrichtung nach einem der Ansprüche 1 bist 3, **dadurch gekennzeichnet, dass** Energieanschlüsse paarig an beiden Seiten der Vorrichtung vorgesehen sind.

5. Vorrichtung nach einem der Ansprüche 1 bis 4, **dadurch gekennzeichnet, dass** mehrere Wannen (T1, T2, T3, T4) vorgesehen sind, die abwechselnd im Gleichstrom und im Gegenstrom mit einem Kühlmedium beaufschlagbar sind.

6. Vorrichtung nach einem der Ansprüche 1 bis 5, **dadurch gekennzeichnet, dass** sowohl die Blenden (8) als auch die Stirnwände (20) der Wanne (T1, T2, T3, T4) in zwei unterschiedlichen Stellungen befestigbar sind.

## Claims

1. An apparatus for calibrating and cooling plastic profiles, consisting of a least one trough (T1, T2, T3, T4), comprising a first face wall (20) and a second face wall (20) in which openings (8a) are provided for allowing passage of the plastic profile to be processed, and with baffles (9) which are arranged between face walls (20) in order to guide and calibrate the plastic profile, **characterized in that** centering protrusions (13) and centering recesses (15) are arranged on the face walls (20), with the centering protrusions (13) and the centering recesses (15) being arranged on both face walls (20) in a similar way in a top view, and that a centering recess (15) is arranged symmetrically relative to each centering protrusion (13) with respect to a central axis (14a) of each face wall (20) which is perpendicular in the used position.

2. An apparatus according to claim 1, **characterized in that** a tank cover (6) is provided which can be applied optionally to a first side wall (9, 10) or to a second side wall (9, 10) of the trough (T1, T2, T3, T4).

3. An apparatus according to claim 2, **characterized in that** cocking levers (11) are provided for closing the tank cover (6) which can optionally be applied to the first side wall (9, 10) or to the second side wall (9, 10) of the trough (T1, T2, T3, T4).

4. An apparatus according to one of the claims 1 to 3, **characterized in that** power connections are provided in pairs at both sides of the apparatus.

5. An apparatus according to one of the claims 1 to 4, **characterized in that** several troughs (T1, T2, T3, T4) are provided which can be subjected to a cooling medium in an alternating manner with a co-current and countercurrent.

6. An apparatus according to one of the claims 1 to 5, **characterized in that** both the baffles (8) as well as the face walls (20) of the troughs (T1, T2, T3, T4) can be fastened in two different positions.

## Revendications

1. Dispositif de calibrage et de refroidissement de profils en matière plastique comprenant au moins une cuve (T1, T2, T3, T4) ayant une première paroi frontale (20) et une seconde paroi frontale (20), munies d'orifices (8a) pour permettre le passage du profil en matière plastique à travailler, ainsi que des écrans (8) installés entre les parois frontales (20) et servant à guider et calibrer le profil en matière plastique,
**caractérisé en ce que**
les parois frontales (20) comportent des parties en saillie de centrage (13) et des cavités de centrage (15),
les parties en saillie de centrage (13) et les cavités de centrage (15) étant prévues sur les deux faces frontales (20), de la même manière en vue de dessus et par rapport à l'axe central (14a) de chaque paroi frontale (20), verticale en position d'utilisation, il est prévu une cavité de centrage (15) symétriquement par rapport à chaque partie en saillie de centrage (13).

2. Dispositif selon la revendication 1,
**caractérisé par**
il comprend un couvercle de bac (6) qui peut se fixer au choix à la première paroi latérale (9, 10) ou à la seconde paroi latérale (9, 10) de la cuve (T1, T2, T3, T4).

3. Dispositif selon la revendication 2,
**caractérisé par**
des tendeurs de fermeture (11) pour fermer le couvercle (6), ces tendeurs sont installés au choix sur la première paroi latérale (9, 10) ou sur la seconde paroi latérale (9, 10) de la cuve (T1, T2, T3, T4).

4. Dispositif selon les revendications 1 à 3,
**caractérisé en ce que**
des branchements d'énergie sont prévus par paires sur les deux côtés du dispositif.

5. Dispositif selon les revendications 1 à 4,
**caractérisé en ce que**
plusieurs cuves (T1, T2, T3, T4) sont prévues qui reçoivent alternativement avec du fluide de refroidissement à contre-courant et à courant parallèle.

6. Dispositif selon les revendications 1 à 5,
**caractérisé en ce qu'**
à la fois les écrans (8) et aussi les parois frontales (20) de la cuve (T1, T2, T3, T4) se fixent dans deux positions différentes.
